# DEMANDE DE BREVET EUROPEEN

(11) **EP 0 710 824 A1**
(43) Date de publication de la demande: **08.05.1996**
(21) Numéro de dépôt: 94117491.4
(22) Date de dépôt: 05.11.1994
(51) Int. Cl.: G01K 13/02

(54) **Capteur thermique**

(71) Demandeur: ELTH S.A., L-7327 Steinsel (LU)
(72) Inventeur: Biberich, Armand, L-7313 Heisdorf (LU)
(74) Mandataire: Meyers, Ernest

(57) **Abrégé**

Le capteur comporte un socle (22) conçu pour être fixé, de façon amovible, sur un raccord (10) contenant le fluide, un palpeur (40) de température et des connecteurs électriques (44, 48) reliant le palpeur (40) à des bornes de connexion (26) dans le socle. Le palpeur (40) est disposé au fond d'un capuchon (38) qui est monté de manière télescopique dans l'extrémité du palpeur et qui est soumis à des moyens élastiques pour prendre appui sur un côté d'une plaquette (14) fixée, de façon étanche, dans ledit raccord (10) et dont l'autre côté est en contact direct avec ledit fluide.

Le capteur est notamment prévu pour la mesure de la température du liquide de refroidissement d'un véhicule automobile et peut être remplacé rapidement sans outillage spécial et sans devoir vider le circuit de refroidissement.

## Description

La présente invention concerne un capteur pour la mesure de la température d'un fluide comprenant un socle conçu pour être fixé, de façon amovible, sur un raccord contenant le fluide, un palpeur de température disposé à l'une des extrémités d'une douille dont l'autre extrémité est portée par le socle et des connecteurs électriques reliant le palpeur à des bornes de connexion dans le socle.

Quoique n'y étant pas limitée, l'invention vise plus particulièrement la mesure de la température d'un fluide dans un circuit fermé, notamment la température du liquide d'un circuit de refroidissement d'un véhicule automobile. Pour cette mesure de température, on utilise généralement un élément sensible, tel qu'une thermistance ayant la propriété de changer de résistance électrique en fonction de sa température. La mesure de la résistance fournit dès lors un signal représentatif de la température et utilisable pour la commande, par exemple de la jauge de température sur le tableau de bord, ou d'un ordinateur de bord.

Les thermistances utilisées jusqu'à maintenant se présentent sous forme d'une cartouche qui est vissée sur une conduite du circuit de refroidissement ou sur le radiateur de manière que son élément sensible, généralement une pastille NTC ou PTC (abréviation de "Positive Temperature Coefficient"), baigne constamment dans le liquide de refroidissement.

Ce système présente toutefois l'inconvénient que le remplacement d'une thermistance défaillante dure relativement longtemps. Non seulement il faut dévisser la cartouche et disposer, à cet effet, de l'outillage approprié, mais, et surtout, il faut, au préalable, vider tout le circuit de refroidissement puisque l'enlèvement de la thermistance y laisse une ouverture. Mais, malgré ces inconvénients, il n'existe, jusqu'à présent, pas d'autre capteur pouvant fournir des mesures fiables.

Le but de la présente invention est de combler cette lacune et de prévoir un nouveau capteur qui est facilement démontable, sans outillage spécial, et qui n'exige pas la vidange du circuit contenant le fluide dont on veut mesurer la température.

Pour atteindre cet objectif, l'invention prévoit un capteur du genre décrit dans le préambule, qui est caractérisé en ce que le palpeur est disposé au fond d'un capuchon qui est monté de manière télescopique dans l'extrémité de la douille et qui est soumis à des moyens élastiques le sollicitant hors de la douille et à des moyens de retenue le retenant dans la douille, et en ce que la base du capuchon est conçue pour prendre appui sur un côté d'une plaquette fixée de façon étanche dans ledit raccord et dont l'autre côté est en contact direct avec ledit fluide.

Le palpeur peut être constitué par une pastille de thermistance connue en soi. Ce palpeur ne baigne donc plus dans le fluide dont on veut mesurer la température mais est en contact avec une plaquette qui est réchauffée à la température du fluide par le contact direct avec celui-ci. A cet effet, la plaque doit être en un matériau bon conducteur thermique, comme par exemple de l'aluminium ou du laiton. Étant donné que la plaquette est montée de façon étanche sur le raccord, le capteur peut être démonté sans risque de fuite du liquide.

Les moyens élastiques permettent une compensation totale des dilatations thermiques et des tolérances de fabrication aussi bien du raccord que du capteur et assurent, ainsi, en permanence, un contact parfait entre le palpeur et la plaquette. Ceci est essentiel dans le cas d'un système de fixation rapide du capteur tel que préconisé par l'invention. En effet, selon une autre caractéristique de l'invention, le système de fixation comporte deux pattes flexibles munies de crochets pour pénétrer dans des ouvertures correspondantes du raccord. Cette fixation est très rapide, ne nécessite pas d'outillage et ne souffre pas de risques de dislocation par les vibrations comme les fixations par vis.

Les moyens élastiques sont, de préférence, constitués par un premier ressort à boudin tendu entre la thermistance et l'un des connecteurs et un second ressort à boudin, coaxial au premier et tendu entre le fond du capuchon et l'autre connecteur. La liaison électrique entre la thermistance et les deux connecteurs est donc assurée par les deux ressorts.

Les moyens de retenue du capuchon peuvent être constitués par un bord rentrant de l'extrémité de la douille et un bord sortant du capuchon.

D'autres particularités et caractéristiques de l'invention ressortiront de la description détaillée d'un mode de réalisation avantageux présenté ci-dessous, à titre d'illustration, en référence aux dessins dans lesquels :
- la Figure 1 est une vue en coupe longitudinale à travers un capteur selon la présente invention ;
- la Figure 2 est une vue en coupe longitudinale suivant un plan de coupe perpendiculaire à celui de la Figure 1 et
- la Figure 3 est une vue axiale de face du capteur.

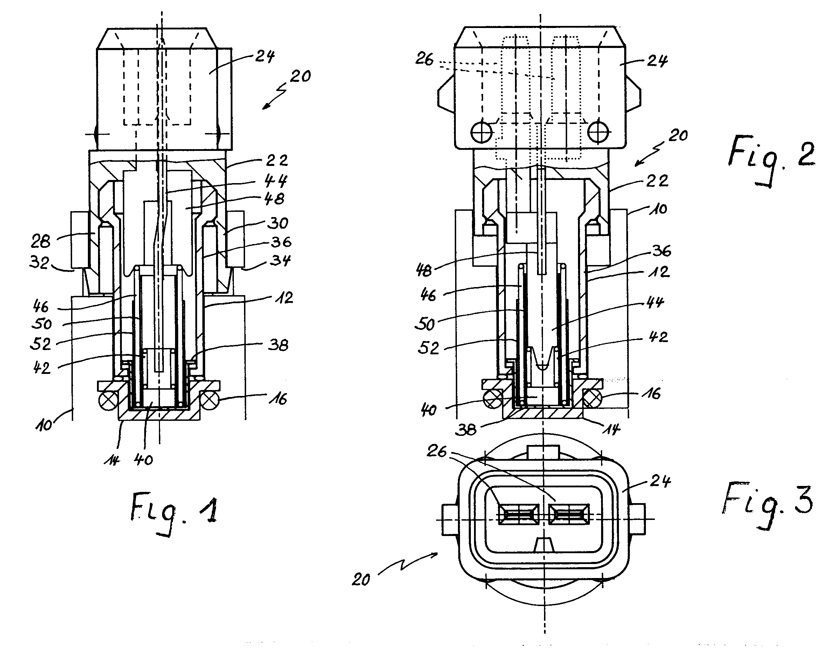

La référence 10 désigne un raccord de montage d'un circuit de refroidissement d'un véhicule automobile. Ce raccord 10 possède un alésage cylindrique axial 12 dont le fond est fermé par une plaquette métallique 14. Cette plaquette 14 est en contact avec le liquide de refroidissement et l'étanchéité est assurée par un joint torique 16. Pour assurer une bonne transmission de chaleur, cette plaquette 14 doit être assez mince et être réalisée en un matériau bon conducteur thermique.

Le raccord 10 sert au montage d'un capteur selon la présente invention, désigné globalement par 20 et destiné à mesurer la température de la plaquette 14 qui correspond sensiblement à celle du liquide de refroidissement.

Le capteur 20 comporte un socle 22, par exemple en matière plastique avec une tête creuse 24 dans laquelle se trouvent deux bornes de connexion 26 pour être relié au circuit électrique du véhicule. Le système de fixation du socle 22 sur le raccord 10 est un système de fixation rapide qui ne demande pas d'outillage. A cet effet, le socle 22 dispose de deux pattes flexibles 28 et 30 dont les extrémités sont en forme de crochets conçus pour pénétrer dans des ouvertures correspondantes 32 et 34 du raccord 10. Pour enlever, le capteur, il suffit simplement d'exercer une poussée sur les deux pattes 28, 30 pour les libérer du raccord. Au lieu de la fixation par clip tel que décrit ci-dessus, on pourrait prévoir, avec autant d'efficacité, une fixation à baïonnette.

Le socle 22 porte une douille cylindrique 36 dans l'extrémité de laquelle est engagé un capuchon 38 qui est destiné à prendre appui sur la plaquette 14. Le capuchon 38 peut glisser axialement par rapport à la douille 36 mais est retenue dans celle-ci par un bord sortant pouvant former butée avec un bord rentrant de la douille 36.

A l'intérieur du capuchon se trouve l'élément sensible qui, en l'occurrence, est une pastille 40 du type PTC ou NTC dont on mesure la résistance électrique pour connaître sa température. Un premier ressort à boudin 42 est comprimé entre la pastille 40 et un premier connecteur électrique 44, tandis qu'un second ressort 46 est comprimé entre le fond du capuchon 38 et un second connecteur 48, les deux connecteurs 44, 48 étant en liaison électrique avec les deux bornes 26. Les deux ressorts à boudin 42 et 46 assurent, par conséquent, la connexion électrique entre les deux faces de la pastille 40 et les deux bornes 26 et maintiennent, en permanence, la pastille en contact avec le capuchon 38 et celui-ci en contact avec la plaquette 14. Le capuchon 38 doit être en un matériau bon conducteur de chaleur afin que la pastille 40 se réchauffe rapidement à la température de la plaquette 14 et celle du liquide de refroidissement.

Les deux ressorts 42 et 46 sont isolés électriquement entre eux par un tube isolant 50, tandis que le ressort extérieur 46 est isolé du capuchon 38 par un autre tube isolant 52. Celui-ci est, toutefois, superflu si le capuchon est lui-même en matière isolante. En revanche, dans ce cas, il faut prévoir, au fond du capuchon 38, une feuille conductrice pour assurer la liaison électrique entre la pastille 40 et le ressort extérieur 46.

Le montage télescopique de la pastille 40 est une caractéristique importante du capteur 20 selon la présente invention et est indissociable du système de fixation rapide en vue d'assurer, en permanence, un contact intime entre la pastille 40, le capuchon 38 et la plaquette 14. L'allongement du capteur 20 sous l'action des ressorts 42, 46 permet une compensation des tolérances de fabrication, notamment de la distance entre la plaquette 14 et les ouvertures 32, 34 de retenue des pattes de fixation 28, 30. Pour cette raison, le capteur 20 doit être dimensionné de telle manière que, dans tous les cas de tolérance possible, le capteur doit toujours subir, lors du montage, un raccourcissement par compression des deux ressorts 42, 46.

Même dans le cas d'une fixation plus classique, par exemple à l'aide de vis, qui permettent, en principe, une compensation des tolérances de fabrication par serrage des vis, le montage télescopique de la pastille est utile, voire nécessaire afin de compenser les variations dimensionnelles pouvant se produire en cours d'utilisation, notamment par suite des dilatations thermiques.

La référence 54 désigne un joint qui assure l'étanchéité entre l'extérieur et l'intérieur du capteur et empêche la pénétration d'humidité qui pourrait fausser les mesures.

Il reste à relever que l'invention n'est pas limitée au mode de réalisation représenté sur les Figures, mais englobe toutes les variantes réalisables par le spécialiste. Par exemple, au lieu de prévoir un capuchon télescopique, il est possible de prévoir une douille à fond fermé et de monter cette douille de façon télescopique sur le socle 22.

De même, l'invention n'est pas limitée à la mesure de la température du liquide de refroidissement d'un véhicule, qui a été choisi à titre d'illustration comme application avantageuse. Le capteur proposé pourrait, par exemple, être utilisé dans l'industrie pour la mesure de la température de gaz ou de vapeur sous pression.

## Revendications

1. Capteur pour la mesure de la température d'un fluide comprenant un socle (22) conçu pour être fixé, de façon amovible, sur un raccord (10) contenant le fluide, un palpeur (40) de température disposé dans l'une des extrémités d'une douille (36) dont l'autre extrémité est portée par le socle (22), des connecteurs électriques (44, 48) reliant le palpeur (40) à des bornes de connexion (26) dans le socle, caractérisé en ce que le palpeur (40) est disposé au fond d'un capuchon (38) qui est monté de manière télescopique dans l'extrémité de la douille (36) et qui est soumis à des moyens élastiques le sollicitant hors de la douille (36) et à des moyens de retenue le retenant dans la douille (36) et en ce que la base du capuchon (38) est conçue pour prendre appui sur un côté d'une plaquette (14) fixée, de façon étanche, dans ledit raccord (10) et dont l'autre côté est en contact direct avec ledit fluide.

2. Capteur selon la revendication 1, caractérisé en ce que le palpeur(40) est constitué d'une pastille de thermistance.

3. Capteur selon la revendication 1, caractérisé par un système de fixation rapide du socle (22) sur le raccord (10).

4. Capteur selon la revendication 3, caractérisé en ce que le système de fixation comporte deux pattes flexibles (28, 30) munies de crochets pour pénétrer dans des ouvertures correspondantes (32, 34) du raccord (10).

5. Capteur selon l'une quelconque des revendications 1 à 4, caractérisé en ce que lesdits moyens élastiques sont constitués par un premier ressort à boudin (42) tendu entre la thermistance (40) et l'un des connecteurs (44) et un second ressort à boudin (46) coaxial au premier et tendu entre le fond du capuchon (38) et l'autre connecteur (48).

6. Capteur selon la revendication 5, caractérisé en ce que la liaison électrique entre la thermistance (44) et les deux connecteurs (44, 48) est assurée par les deux ressorts (42, 46).

7. Capteur selon la revendication 5, caractérisé en ce que les deux ressorts (42, 46) sont séparés entre eux par un tube isolant (50).

8. Capteur selon la revendication 1, caractérisé en ce que lesdits moyens de retenue sont constitués par un bord rentrant de l'extrémité de la douille (36) et un bord sortant du capuchon (38).

9. Capteur selon la revendication 1, caractérisé en ce que l'extrémité de la douille (36) porte un joint (54) destiné à coopérer avec ladite plaquette (14) pour assurer l'étanchéité entre l'extérieur et l'intérieur du capteur.
